# EUROPEAN PATENT APPLICATION

(11) **EP 1 136 494 A2**
(43) Date of publication of application: **26.09.2001**
(21) Application number: 01201939.4
(22) Date of filing: 31.03.1994
(51) Int. Cl.: C07F 7/08, C08G 77/14, C08G 77/30, C08G 77/26

(54) **Method for preparation of stable water-borne silane compositions**

(62) Divisional of application: 94302373.9
(71) Applicant: Sivento Inc., Ridgfield Park NJ 07660 (US)
(72) Inventor: Steinmetz, James R., Princeton, New Jersey (US); Arkles, Barry C., Dresher, Pennsylvania (US)
(74) Representative: W.P. THOMPSON & CO.

(57) **Abstract**

A method for forming stable, water-borne silane compositions comprises combining an organic moiety containing hydroxyl groups, a water soluble silane which contains alkoxy groups and a transesterification catalyst, allowing the transesterification catalyst to effect the complete transesterification of the alkoxy groups of the water insoluble silane; and removing from the mixture alcohol compounds produced during the transesterification reaction. The organic moiety containing hydroxyl groups and the transesterification catalyst are present in sufficient quantities to ensure completion of the transesterification reaction, whereby all of the alkoxy groups of the water insoluble silane are transesterified.

## Description

### FIELD OF THE INVENTION

This invention relates generally to a method for preparing silanes, and more particularly to a method for preparing stable, water-borne silanes.

### BACKGROUND OF THE INVENTION

Organosilanes have been commercially important as coupling agents in composite systems for over three decades. Due to its ability to react with both organic and inorganic substrates, organosilane can facilitate bonding of disparate substances such as organic resins and polymers with inorganic substrates.

The reaction of silane coupling agents involves five steps. First, hydrolysis of alkoxysilanes generates reactive silanol groups which are the bonding sites for attachment to inorganic substrates. The water for hydrolysis of alkoxy groups can be present on the substrate's surface, can be absorbed from the atmosphere, or it can be contained in the medium. Next, a condensation reaction forms oligomers. In the third step, the oligomers hydrogen bond with available hydroxyl groups of the inorganic surface. In the fourth step, water is split off and stable siloxane linkages form. Finally, the reactive organofunctional group will form covalent and hydrogen bonds with the organic resin or polymer during cure.

In silane surface treatment it has been the practice to hydrolyze the alkoxy groups of alkoxysilanes to form silanol containing species, which, as noted above, are highly reactive and specifically responsible for hydrogen bonding with the substrate. Hydrolysis to silanol generates alcohol as a by-product, typically methanol or ethanol, which are toxic and extremely flammable. Thus, in terms of enhanced reactivity, environmental and safety advantages, it would be ideal to supply silanes in silanol form without the presence of such by-products. Silanols, however, tend to self-condense to form siloxanes resulting in phase separation or gelation.

Due to poor solution stability in water, i.e., reaction to form silanol and then siloxanes, alkoxy silanes have typically been provided in various organic solvents. However, with increasingly strict VOC requirements, use of such organic solvents has become undesirable. It would, therefore, be desirable to provide silanes in aqueous solutions.

Aqueous compositions of alkyltrialkoxysilanes have been disclosed in the prior art. In U.S. Patent 5,073,195 to Cuthbert et al., an aqueous composition of a water soluble silane-coupling agent and an alkyltrialkoxysilane is disclosed. The composition of Cuthbert is said to overcome a deficiency of prior water repellent compositions associated with an inability of such repellents to leave a layer upon the porous substrate to be treated, resulting in coatings of low durability. In addition, the benefits of providing the silanes in an aqueous solution are noted. To form the composition of Cuthbert, alkyltrialkoxysilane, water soluble coupling agent and a limited amount of water are mixed and stripped to 60°C under an aspirator. Cuthbert discloses that the molar ratio of alkyltrialkoxysilane to the water soluble coupling agent should be between 0.5:1 to about 3.0:1, preferably 1.5:1 to about 2.0:1. According to the examples, the molar ratio of water to alkyltrialkoxysilane is about 1.1 - 1.3:1. Since a minimum of molar ratio of water to alkyl trialkxoysilane of 1.5:1 is required to completely hydrolyze the alkyltrialkoxysilane, less than all alkoxy groups of the alkyltrialkoxysilane compositions of Cuthbert will undergo hydrolysis. Thus, once the residue of the reaction described above is added to water to prepare aqueous silane solutions, further hydrolysis will take place generating additional unwanted alcohol by-product and, ultimately, siloxane. The shelf-life of the aqueous silane solutions of Cuthbert is therefore expected to be short. Further, the alcohol by-product renders such solutions extremely flammable.

Thus, there is a need for aqueous solutions of alkoxy silanes of greater stability and lower flammability than those heretofore available.

### SUMMARY OF THE INVENTION

A method for enhanced stabilization of aqueous solutions of alkoxysilanes has now been found. The method, broadly stated, comprises reacting water insoluble alkoxysilanes with stabilizing agents, removing, by distillation, the alcohol which is generated and adding water to form the aqueous solution. The method of the invention, which ensures that alkoxysilane is completely reacted, results in aqueous solutions of silanes which are otherwise insoluble, which are stable for six months or more and have extremely high flash points.

### DETAILED DESCRIPTION OF THE INVENTION

In a first embodiment of the invention, water soluble silanes are used as solution stabilizing agents for water insoluble silanes.

As used herein, water soluble silanes refer to amino- or phosphatofunctional silicon compounds, as further described below. Water insoluble silanes, for the purposes of this application, refer to trialkoxysilanes.

In this embodiment, water soluble silane, water insoluble silane and deionized water are mixed and agitated. Water soluble silane and water insoluble silane are present in a molar ratio of at least about 2.5 to 1. At lower ratios of soluble to insoluble silane, gelation can occur.

The minimum theoretical molar ratio of water to water insoluble silane is 1.5:1.0 to completely hydrolyze the water insoluble silane. Complete hydrolysis of the water insoluble silane is essential to the present method. In the absence of complete hydrolysis during the preparation of such water-borne silane compositions, further hydrolysis will occur during storage resulting in alcohol formation.

While 1.5:1.0 is the minimum theoretical water to water insoluble silane molar ratio, higher ratios are preferable. One reason for this preference is that the reaction product tends to be viscous, the additional water facilitating handling. Reaction mixtures ranging from 10 to 60 percent aqueous solutions, based on total silanes in total silanes plus water, are recommended. Thus, the water soluble silane, water insoluble silane and water are preferably present, respectively, in the reaction mixture in a molar ratio ranging from about 1.0:0.3:11 to about 1.0:0.4:148.

An antifoam agent may optionally be added to the reaction mixture. Alcohol produced during the hydrolysis is substantially completely removed with suitable equipment, such as a fractionating column. Additional water is then added to the reaction product as alcohol is distilled off.

Suitable water soluble silanes include, without limitation, aminofunctional silanes such as N-(aminoethylaminomethyl)phenyltrimethoxysilane, N-(2-aminoethyl) -3-aminopropyltris(2-ethylhexoxy) -silane, 3-aminopropyltrimethoxysilane, and phosphato silanes such as diethylphosphatoethyltriethoxysilane. The preferred water soluble silanes include trimethoxysilyl-propyldiethylenetriamine and N-(2-aminoethyl)-3-aminopropyltrimethoxysilane, and most preferred is aminopropyltriethoxysilane.

The aforementioned water soluble silanes may be used to stabilize and solubilize a broad range of water insoluble silanes, including, without limitation, those with amine, epoxy, mercapto, methacrylate, vinyl, alkyl organo-functional groups and mixtures thereof. Examples of such silanes include, without limitation, 3-chloropropyltrimethoxysilane, 3-mercaptopropyltrimethoxysilane, methyltrimethoxysilane, vinyltriethoxysilane. Preferred water insoluble silanes for use in the present invention include methyltriethoxysilane, vinyltrimethoxysilane, gamma-glycidoxypropyltrimethoxysilane and 3-methacryloxypropyltrimethoxysilane.

In a second embodiment of the present method, an organic moiety containing hydroxyl groups is used as a solution stabilizing agent for water insoluble silanes. Examples of such a compound include, without limitation, polyethylene glycol, dipropylene glycol, and, most preferred for the present invention, diethylene glycol.

An effective amount of a transesterification catalyst should be added to the reaction mixture of the second embodiment. While reaction can occur in the absence of such catalyst, the extent of the reaction and the time required for the non-catalyzed reaction makes it more practical to practice the invention in the presence of a catalyst. Suitable transesterification catalyst include, without limitation, alkyl titanates such as butyl titanate, and tin compounds such as dibutyltin dilaurate.

The hydroxyl containing organic moiety and water insoluble silane are present in a molar ratio of at least 1.5:1. A range of 3:1 to 6:1 is preferred, but higher ratios can be used as well. At these ratios, the water insoluble silane is substantially completely reacted. Alcohol produced during reaction is removed with suitable equipment, such as a fractionation column. Following alcohol removal, water is added to the reaction product to form a suitable aqueous solution.

The reactions occuring in the first and second embodiments of the present invention can be carried out at room temperature and atmospheric pressure. The reaction is mildly exothermic, however cooling is not required.

The following examples illustrate the method of the present invention. The examples are intended merely for purpose of illustration and are not to be regarded as limiting the scope of the invention or the manner in which it may be practiced.

### EXAMPLE I

A one liter, three neck flask was equipped with an overhead stirrer, condenser and thermometer. One mole (221.4 g.) of aminopropyltriethoxysilane, 0.41 moles (73.8 g.) of methyltriethoxysilane and 24.6 moles (442.8 g.) of deionized water were added to the flask. A temperature rise of about 30°C was observed. The mixture was agitated for one hour. 0.07 g of SAG 5693 (antifoam additive) was added to the mixture. SAG is a silicon surfactant commercially available from OSi Specialties of Danbury, Connecticut. The reaction apparatus was equipped with a fractionating column, still head and condenser. The reaction mixture was heated to remove an ethanol/water mixture by distillation. Distillation continued until the vapor temperature was constant at 100°C and ethanol concentration in the flask was less than 1 percent. As distillate was removed, its volume was replaced, in the reaction flask, by adding water. The contents of the reaction flask were then cooled. The reaction yielded 725.0 g. of product (I) having the general structure shown below:

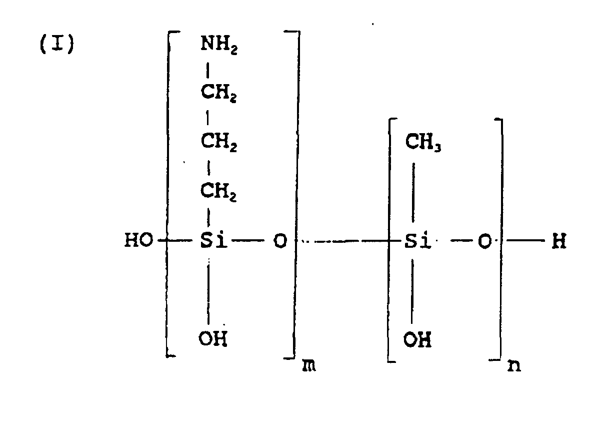

### EXAMPLE 2

The same apparatus is utilized as in Example 1. One mole of aminopropyltriethoxysilane, 0.41 moles (60.7 g.) of vinyltrimethoxysilane and 24.6 moles of deionized water were charged to the flask. A temperature rise of about 30°C was observed. The mixture was agitated for one hour. 0.07 g of SAG 5693 was added to the mixture. The reaction mixture was heated to remove an methanol/ethanol/water mixture by distillation. Distillation continued until the vapor temperature was constant at 100°C and ethanol concentration in the flask was less than 1 percent. As distillate was removed, its volume was replaced, in the reaction flask, by adding water. The contents of the reaction flask were then cooled. The reaction yielded 710.0 g. of product (II) having the general structure shown below:

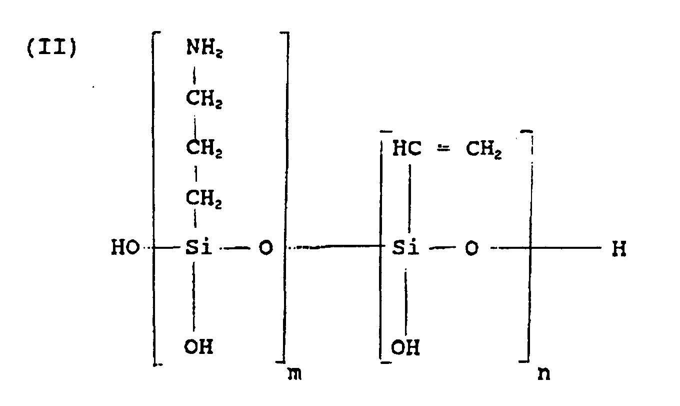

### EXAMPLE 3

The same apparatus was utilized as in the previous examples except that the reaction flask had a two liter capacity. one mole (236.4 g.) of gamma-glycidoxypropyltrimethoxysilane, three moles (318.4 g.) of diethylene glycol and 0.24 g. of butyl titanate catalyst were charged to the flask. The flask was heated and the methanol was removed by distillation upon formation. After complete removal of methanol, and cooling of the flask and its contents, an additional 3 moles of diethylene glycol were added to the flask. Water (860 g.) was added and the product (III), approximately 1605 g., was collected by filtration. The product (III) is generally believed to have had the following structure:

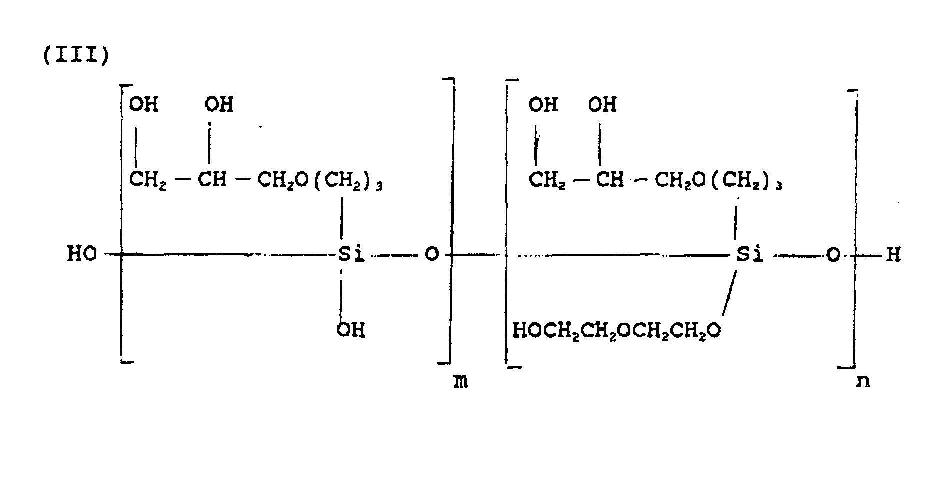

### EXAMPLE 4

224 g. water, and 12 g. of NaOH to facilitate solubilization, were charged into a one liter flask and agitated until the NaOH was completely dissolved. 98.4 g. of diethylphosphatoethyltriethoxysilane was added to the flask and agitated until the solution was clear (completely hydrolyzed). 23 g. of methacryloxypropyltrimethoxysilane was added to the phosphato/water solution and agitated until the solution was clear. (The diethylphosphatoethyltriethoxysilane to methacryloxypropyltrimethoxysilane molar ratio was 1.0:0.3.) A rotary evaporator was used to strip EtOH/MeOH from the solution at low heat (50°C maximum). As alcohol was drawn off, 357.4 g of water was added to the flask to replenish to the original volume.

The stable water-borne silane compositions produced according to the present invention are useful, for example, as a component for providing adhesive strength in acrylic latex and other sealants. Silane is typically present as a component in such a sealant formulation at about 0.55 weight percent. Acrylic latex sealants formulated with stable water-borne silanes produced according to the present method will have a shelf life far in excess of that of sealants formulated with conventional silanes.

The following numbered paragraphs summarise the invention disclosed:
1. A method for forming stable, water-borne silane compositions comprising:
   (a) combining a solution stabilizing agent with a water insoluble silane which contains alkoxy groups;
   (b) adding a second agent to cause removal of alkoxy groups from the water insoluble silane; and
   (c) removing from the mixture alcohol compounds produced during step (b);
   wherein the solution stabilizing agent and the second agent are present in sufficient quantity to react all the alkoxy groups of the water insoluble silane.
2. The method of paragraph 1 further comprising adding water to form an aqueous solution during the time when or after alcohol is removed.
3. The method of paragraph 1 wherein the solution stabilizing agent is selected from the group consisting of water soluble silane and organic moieties which contain hydroxyl groups.
4. The method of paragraph 3 wherein the water soluble silane is selected from the group consisting of aminofunctional silane and phosphatofunctional silane.
5. The method of paragraph 3 wherein the water soluble silane is selected from the group consisting of aminopropyltriethoxysilane, trimethoxysilyl-propyldiethylenetriamine and N-(2-aminoethyl)-3-aminopropyltrimethoxysilane.
6. The method of paragraph 4 or 5 wherein the second agent is water.
7. The method of paragraph 6 wherein the molar ratio of the water soluble silane, the water insoluble silane and water is about 1.0:0.4:11 to about 1.0:0.4:148.
8. The method of paragraph 6 further comprising adding water during alcohol removal.
9. The method of paragraph 3 wherein the organic moiety containing hydroxyl groups is selected from the group consisting diethylene glycol, polyethylene glycol and dipropylene glycol.
10. The method of paragraph 9 wherein the second agent is a transesterification catalyst.
11. The method of paragraph 10 wherein the transesterification catalyst is selected from the group consisting of alkyl titanates and tin compounds.
12. The method of paragraph 10 wherein the molar ratio of the organic moiety containing hydroxyl groups to the water insoluble silane is about 3.0:1.0 to 6.0:1.0.
13. The method of paragraph 12 further comprising adding water after alcohol removal.
14. A method for forming silane compositions which are stable in aqueous solutions, comprising the steps of:
   (a) reacting a water soluble silane, a water insoluble silane and water to form a product having active silanol groups; and
   (b) removing alcohol formed as a result of the reaction of step (a) ;
   where the water soluble silane, the water insoluble silane and water which are reacted in step (a) are present in a molar ratio of between about 1.0:0.3:11 to about 1.0:0.4:148 to ensure that the water insoluble silane is completely hydrolyzed.
15. The method of paragraph 14 wherein water is added to the solution during alcohol removal.
16. The method of paragraph 14 wherein the water soluble silane is chosen from the group consisting of aminofunctional silane and phosphatofunctional silane.
17. The method of paragraph 14 wherein the water soluble silane is selected from the group consisting of aminopropyltriethoxysilane, trimethoxysilyl-propyldiethylenetriamine and N-(2-aminoethyl)-3-aminopropyltrimethoxysilane.
18. The method of paragraph 14 wherein the water insoluble silane has an organo group selected from the group consisting of amine, epoxy, mercapto, methacrylate, vinyl, alkyl and combinations thereof.
19. The method of paragraph 14 wherein the water soluble silane is aminopropyltriethoxysilane and the water insoluble silane is selected from the group consisting of methyltriethoxysilane, vinyltrimethoxysilane, gamma-glycidoxypropyltrimethoxysilane and 3-methacryloxypropyltrimethoxysilane.
20. The method of paragraph 14 wherein an antifoam additive is added.
21. A method for forming silane compositions which are stable in aqueous solutions, comprising the steps of:
   (a) reacting an organic moiety which contains hydroxyl groups and a water insoluble silane in the presence of an effective amount of a transesterification catalyst; and
   (b) removing alcohol formed as a result of the reaction of step (a);
   where the organic moiety which contains hydroxyl groups and the water insoluble silane which are reacted in step (a) are in a molar ratio of at least about 1.5:1.0.
22. The method of paragraph 21 wherein water is added to the reaction product after alcohol removal.
23. The method of paragraph 21 wherein the organic moiety which contains hydroxyl groups is selected from the group consisting of diethylene glycol, polyethylene glycol and dipropylene glycol.
24. The method of paragraph 21 wherein the water insoluble silane is selected from the group consisting of methyltriethoxysilane, vinyltrimethoxysilane, gamma-glycidoxypropyltrimethoxysilane and 3-methacryloxypropyltrimethoxysilane.
25. The method of paragraph 21 wherein the transesterification catalyst is selected from the group consisting of alkyl titanates and tin compounds.
26. A method for forming stable, water-borne silane compositions comprising combining a solution stabilizing agent with a water insoluble silane, adding a second agent to remove alkoxy groups from the water insoluble silane, and removing alcohol which is produced during the previous steps. The molar ratio of the solution stabilizing agent to the water insoluble silane is at least about 2.5 to 1.

## Claims

1. A method for forming water-borne silane compositions 25 stable in aqueous solution, the method comprising:
(a) combining an combining an organic moiety containing hydroxyl groups, a water insoluble silane which contains alkoxy groups and a transesterification catalyst;
(b) allowing the transesterification catalyst to effect the complete transesterification of the alkoxy groups of the water insoluble silane; and
(c) removing from the mixture alcohol compounds produced during the transesterification reaction of step (b);
wherein the organic moiety containing hydroxyl groups and the transesterification catalyst are present in sufficient quantities to ensure completion of the transesterification reaction, whereby all of the alkoxy groups of the water insoluble silane are transesterified.

2. A method according to claim 1, further comprising adding water to form an aqueous solution during the time when or after the alcohol compounds are removed.

3. A method according to claim 2, wherein water is added after the alcohol compounds are removed and further organic moiety containing hydroxyl groups is added between alcohol removal and water addition.

4. A method according to any of claims 1 to 3, wherein the organic moiety containing hydroxyl groups is selected from diethylene glycol, polyethylene glycol and dipropylene glycol.

5. A method according to any of claims 1 to 4, wherein the water insoluble silane has an organo group selected from amine, epoxy, mercapto, methacrylate, vinyl, alkyl and combinations thereof.

6. A method according to claim 5, wherein the water insoluble silane is selected from methyltriethoxysilane, vinyltrimethoxysilane, gamma-glycidoxypropyltrimethoxysilane and 3-methacryloxypropyltrimethoxysilane.

7. A method according to any of claims 1 to 6, wherein the transesterification catalyst is selected from alkyl titanates and tin compounds.

8. A method according to any of claims 1 to 7, wherein an antifoam additive is added.

9. A method according to any of claims 1 to 8, wherein the organic moiety which contains hydroxyl groups and the water insoluble silane which are reacted in step (a) are in a molar ratio of at least about 1.5:1.0.

10. A method according to claim 9, wherein the organic moiety which contains hydroxyl groups and the water insoluble silane which are reacted in step (a) are in a molar ratio of about 3.0:1.0 to 6.0:1.0.
